# EUROPÄISCHE PATENTANMELDUNG

(11) **EP 0 698 977 A1**
(43) Veröffentlichungstag der Anmeldung: **28.02.1996**
(21) Anmeldenummer: 95110242.5
(22) Anmeldetag: 30.06.1995
(51) Int. Cl.: H04L 12/40, G06F 13/40

(54) **Leitungsabschluss für abschnittsweise verlängerbare Leitungen von BUS-Systemen**

(30) Priorität: 24.08.1994 DE 4431416
(71) Anmelder: DeTeWe - Deutsche Telephonwerke Aktiengesellschaft & Co., D-10997 Berlin (DE)
(72) Erfinder: Huhn, Karl-Eckhardt, D-13465 Berlin (DE); Riehm, Nikolaus, D-22359 Hamburg (DE)

(57) **Zusammenfassung**

Für den Leitungsabschluß abschnittsweise verlängerbarer Leitungen von BUS-Systemen von Anlagen wird vorgeschlagen, jeder Komponente (K) schaltbare Leitungsabschlüsse (SL) mit Leitungsendedetektoren (LE) an beiden Seiten der Innenleitung (LI) zuzuordnen. Der Leitungsendedetektor erkennt ein offenes Leitungsende und schaltet den Abschlußwiderstand (RA) des zugeordneten schaltbaren Leitungsabschlusses aktiv.

## Beschreibung

Die Erfindung betrifft einen Leitungsabschluß für abschnittsweise verlängerbare Leitungen von BUS-Systemen bei Erweiterungen von Anlagen durch Einfügen zusätzlicher Komponenten mittels Verlängerungsleitungen.

Leitungen oder Leitungssysteme für die Informations- und/oder Datenübertragung, insbesondere in Telekommunikations-Anlagen, erfordern bei digitaler Signalübertragung aufgrund ihrer charakteristischen Eigenschaften je einen Leitungsabschluß an beiden Leitungsenden. Dieser Leitungsabschluß ist bei systeminternen Leitungen oder Leitungssystemen fest an den Leitungsenden installiert. Bei abschnittsweise erweiterbaren Leitungen oder Leitungssystemen werden die Abschlüsse vielfach in Form von steckbaren Modulen an die jeweiligen Endpunkte montiert.

Diese Technik hat den Nachteil, daß die technische Zuverlässigkeit reduziert wird, da der Abschluß verlorengehen oder bei einer Erweiterung dessen Montage vergessen werden kann. Darüber hinaus entstehen höhere Kosten durch diese Zusatzmodule.

Der Erfindung lag die Aufgabe zugrunde, für abschnittsweise verlängerbare Leitungen Leitungsabschlüsse zu schaffen, die sich automatisch bei einer Verlängerung zuschalten.

Diese Aufgabe ist dadurch gelöst, daß der internen Innenleitung jeder Komponente eingangs- und ausgangsseitig je ein Verbindungselement, ein Leitungsendedetektor und ein schaltbarer Leitungsabschluß zugeordnet wird, die schaltungstechnisch identisch aufgebaut sind, daß der am Leitungsende vorhandene Leitungsendedetektor durch Nichtbeschaltung das Leitungsende erkennt und den schaltbaren Leitungsabschluß aktiv schaltet.

Weitere vorteilhafte Maßnahmen sind Gegenstand der Unteransprüche.

Der Vorteil dieser Anordnung besteht darin, daß die Leitungsabschlüsse am Anfang und am Ende jedes Leitungsabschnittes fest montiert und schaltbar ausgeführt sind. Ein Leitungsendedetektor erkennt die jeweilige Position des Abschnittes innerhalb einer variablen Aneinanderreihung von Leitungsabschnitten. An den realen Enden der Leitungen oder des Leitungssystems werden die Leitungsabschlüsse aktiv, in allen anderen Fällen bleiben die Leitungsabschlüsse passiv geschaltet. Die Aneinanderreihung von derartigen Abschnitten kann variabel vorgenommen werden, z. B. durch Kettung oder Schlaufung. In allen Fällen stellt sich der richtige Abschluß automatisch ein. Die technische Ausführung der Leitungsabschlüsse kann beliebig sein, z. B. in Form von Rückwandbaugruppen, flexiblen Schaltungen der Komponenten, Kabeln usw.

Die Erfindung wird nachfolgend anhand einer aus sechs Figuren bestehenden Zeichnung näher erläutert. Darin zeigt die
- Fig. 1: eine Darstellung eines BUS-Leitungssystems, die
- Fig. 2: die Ausführung einer Komponente des BUS-Leitungssystems nach Figur 1 gemäß der Erfindung, die
- Fig. 3: das Beispiel gleichseitiger Kabelführung (Schlaufung) zwischen Komponenten, die
- Fig. 4: das Beispiel der wechselseitigen Kabelführung (Kettung) zwischen Komponenten, die
- Fig. 5: das Beispiel einer gemischten Kabelführung zwischen Komponenten und die
- Fig. 6: die Schaltungsanordnung von Leitungsabschlüssen.

In allen Figuren tragen gleiche Bauelemente dieselben Bezugszeichen.

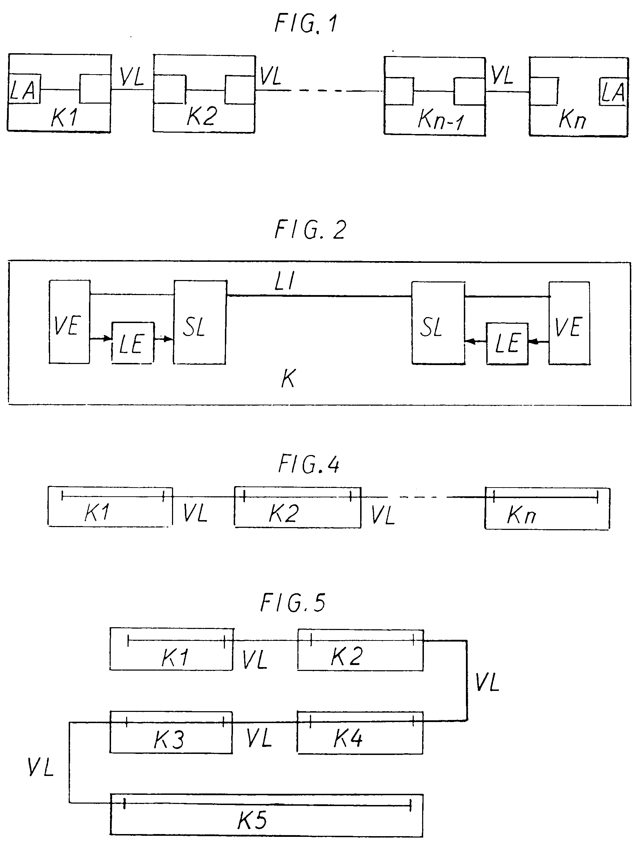

Leitungssysteme mit den entsprechenden Abschlußeinheiten sind in technischen Systemen bekannt. Beispiele hierfür sind die BUS-Systeme PCM-BUS, IOM-2-BUS, S0-BUS in der Telekommunikation. Die Figur 1 zeigt die allgemeine Struktur solcher Konfigurationen, die jeweils so ausgeführt sind, daß Erweiterungen durch das Einfügen weiterer Komponenten K an einer beliebigen Stelle möglich sind. Im gezeigten Beispiel sind die Komponenten K1 bis Kn selbst Teil des BUS-Systems.

Zur besseren Handhabung sind die Leitungsabschlüsse LA auf die erste und letzte Komponente K1 bzw. Kn im BUS-System allgemein steckbar ausgeführt.

Wird das BUS-System durch Hinzufügen einer Komponente Kn+1 erweitert, so wird der Leitungsabschluß LA auf der Komponente Kn entfernt und auf die Komponente Kn+1 gebracht.

Die Nachteile dieser Vorgehensweise sind zusätzliche Fehlermöglichkeiten, indem bei fehlenden oder mehrfachen Leitungsabschlüssen LA für das BUS-System die vorgegebenen Grenzwerte nicht mehr eingehalten werden.

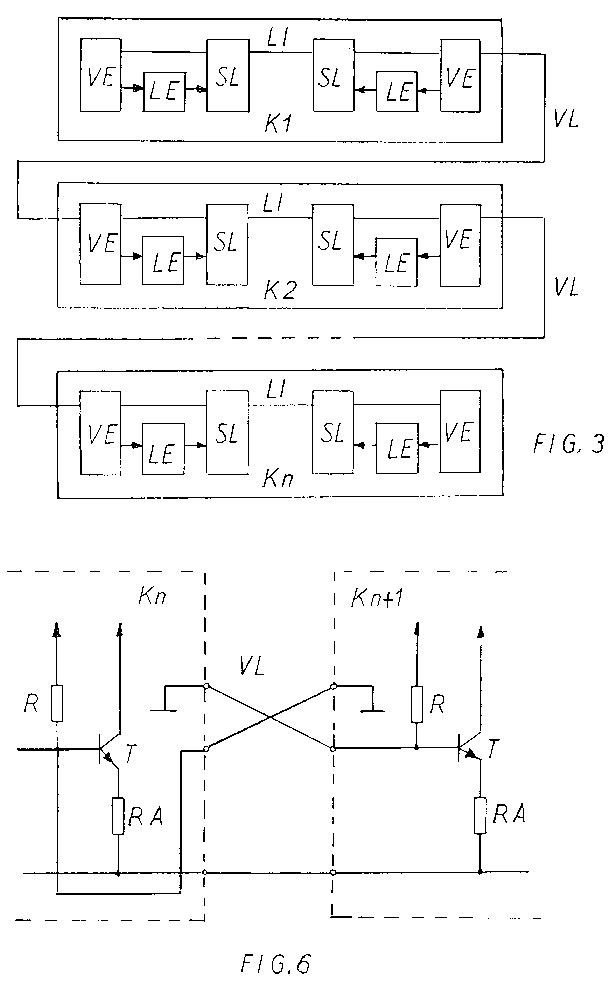

Die Erfindung schlägt eine andere prinzipielle Art des Aufbaues einer Komponente K eines BUS-Systems vor, das durch Verlängerungsleitungen VL erweitert werden kann. An den Enden der internen Leitung LI befindet sich je ein schaltbarer Leitungsabschluß SL, ein Leitungsendedetektor LE und ein Verbindungselement VE für die Verlängerungsleitung. Der Leitungsendedetektor LE erkennt über das Verbindungselement VE das Leitungsende und signalisiert dem schaltbaren Leitungsabschluß SL, die Leitung abzuschließen. Wird ein weiteres Modul über eine Verlängerungsleitung VL angeschaltet, so wird dies über den Leitungsendedetektor LE erkannt und der schaltbare Leitungsabschluß SL wird den Leitungsabschluß passiv schalten. Dies wird in Figur 3 beispielhaft an n durch eine Verlängerungsleitung VL verbundenen Komponenten K gezeigt. Die Kabelführung dieser Konfiguration ist gleichseitig, eine sogenannte Schlaufung. Die Leitungsenden befinden sich jeweils dort, wo keine Verlängerungsleitung VL angeschlossen ist. Der Leitungsendedetektor LE erkennt dies und schaltet den schaltbaren Leitungsabschluß SL aktiv.

Die BUS-Beschaltung der Verbindungselemente VE auf beiden Seiten einer Komponente K sind identisch. Dies hat den Vorteil, daß die BUS-Konfiguration für eine optimale Kabelführung ausgelegt werden kann.

Die Konfiguration kann in der Komponentenlänge, der Kabellänge und Kabelführung gemischt werden. Anstelle der in Figur 3 dargestellten Schlaufung ist eine wechselseitige Kabelführung gemäß Figur 4, eine sogenannte Kettung, möglich.

Eine gemischte Konfiguration mit unterschiedlichen Kabel- und Komponentenlängen und einer Kombination aus Schlaufung und Kettung ist in Figur 5 dargestellt.

Eine Ausführung des schaltbaren Leitungsabschlusses SL und des Leitungsendedetektors LE ist in der Figur 6 gezeigt. Der schaltbare Leitungsabschluß SL besteht aus einem Transistor T und einem Abschlußwiderstand RA. Der Leitungsendedetektor LE wird durch einen Widerstand R und der Leitung vom Widerstand R zur nächsten Komponente gebildet. Ist keine Verlängerungsleitung VL angeschlossen, so wird über z. B. positives Potential am Widerstand R der Transistor T leitend gesteuert und damit die Leitung durch den Abschlußwiderstand RA abgeschlossen.

Ist eine Verlängerungsleitung VL angeschlossen, so liegt z. B. negatives Potential an der Basis des Transistors T, der damit z. B. nichtleitend geschaltet bleibt. Der zugeordnete Widerstand RA bleibt passiv geschaltet.

Da die Verbindungselemente VE auf beiden Seiten einer Komponente K identisch sind, muß im Kabel das Signal für den Leitungsendedetektor LE entsprechend geführt werden. Aus diesem Grund sind die Adern der Verlängerungsleitungen VL für den Anschluß an die Transistorbasen an z. B. negatives Potential der nächsten Komponente K kreuzend geführt.

## Patentansprüche

1. Leitungsabschluß für abschnittsweise verlängerbare Leitungen von BUS-Systemen bei Erweiterungen von Anlagen durch Einfügen zusätzlicher Komponenten (K) mittels Verlängerungsleitungen (VL), dadurch gekennzeichnet, daß der internen Innenleitung (LI) jeder Komponente (K) eingangs-und ausgangsseitig je ein Verbindungselement (VE), ein Leitungsendedetektor (LE) und ein Leitungsabschluß (SL) zugeordnet wird, die schaltungstechnisch identisch aufgebaut sind, daß der am Leitungsende vorhandene Leitungsendedetektor (LE) durch Nichtbeschaltung das Leitungsende erkennt und den schaltbaren Leitungsabschluß (SL) aktiv schaltet.

2. Leitungsabschluß nach Anspruch 1, dadurch gekennzeichnet, daß der schaltbare Leitungsabschluß (SL) aus einem Transistor (T) und einem Abschlußwiderstand (RA) gebildet ist.

3. Leitungsabschluß nach Anspruch 1, dadurch gekennzeichnet, daß der Leitungsendedetektor (LE) aus einem Widerstand (R) und der Leitung vom Widerstand (R) zur nächsten Komponente (K) besteht.

4. Leitungsabschluß nach Anspruch 1 und 3, dadurch gekennzeichnet, daß die Adern der Verlängerungsleitung (VL) für den Anschluß der Basen der Transistoren (T) an negatives Potential der nächsten Komponente (K) kreuzend geführt sind.
